## Europäisches Patentamt
## European Patent Office
## Office européen des brevets

(19)

(11) Numéro de publication: **0 161 196 B1**

(12) **FASCICULE DE BREVET EUROPEEN**

(45) Date de publication du fascicule du brevet:
26.10.88

(51) Int. Cl.⁴: **A 61 C 1/07**

(21) Numéro de dépôt: **85430012.6**

(22) Date de dépôt: **19.04.85**

(54) Tête d'entraînement pour instruments d'interventions endodontiques.

(30) Priorité: **20.04.84 FR 8406446**

(43) Date de publication de la demande:
**13.11.85 Bulletin 85/46**

(45) Mention de la délivrance du brevet:
**26.10.88 Bulletin 88/43**

(84) Etats contractants désignés:
**AT BE CH DE FR GB IT LI LU NL SE**

(56) Documents cités:
**CH - A - 291 667**
**GB - A - 295 550**
**US - A - 3 552 022**
**US - A - 4 299 571**
**US - A - 4 341 519**

(73) Titulaire: **Levy, Guy, 49, rue Croix de Regnier,
F-13004 Marseille (FR)**

(72) Inventeur: **Levy, Guy, 49, rue Croix de Regnier,
F-13004 Marseille (FR)**

(74) Mandataire: **Reinhard, Skuhra, Weise,
Leopoldstrasse 51, D-8000 München 40 (DE)**

ACTORUM AG

## Description

La présente invention concerne une tête d'entraînement pour instrument d'interventions radiculaires suivant le préambule de la revendication 1 et de manière plus intéressante, une tête d'entraînement dans laquelle vient s'insérer une lime endodontique comportant une arête hélicoïdale selon le préambule de la revendication 7.

Comme on le sait, le traitement endodontique comporte trois opérations successives:

Dans la première opération, il est procédé un cathétérisme pour réaliser la première pénétration du canal radiculaire ce qui assure un passage initial de petit diamètre jusqu'à environ 0.5 mm de l'apex de la dent.

A cela succède la mise en forme du canal de la dent, durant laquelle la mise en forme finale du passage pratiqué dans le canal consiste en un raclage opéré sur la paroi interne de ce passage et sur toute sa longueur de façon à obtenir un alésage régulier facilitant la dernière opération.

Cette dernière opération consiste en l'obturation canalaire destinée à supprimer la cavité qui résulte des deux opérations précédentes.

De telles interventions sont délicates avant tout du fait que le canal des racines dentaires présente des longueurs et des sections transversales variées suivant le type de dent à traiter et en fonction des données physiologiques ou pathologiques.

A ceci s'ajoute le fait qu'il faut utiliser des instruments endodontiques relativement fins pour lesquels les risques de fractures ou de déformations permanentes sont très grands, en particulier pour le cathétérisme et la mise en forme de la racine dentaire.

US-A-3 552 022 présente un contre-angle destiné à nettoyer ou polir les surfaces interproximales des dents, dans lequel est prévu un logement conique pour un instrument de nettoyage interdentaire destiné à se déplacer longitudinalement.

Cet instrument de nettoyage interdentaire présente une section triangulaire s'adaptant à l'anatomie des espaces interprominaux des dents et il est destiné à nettoyer ces espaces interdentaires par un mouvement de va-et-vient axial dont l'amplitude constante est de 3 mm.

La monture de l'instrument possède une rainure latérale circulaire dans laquelle pénètre un entraînement à excentrique ainsi qu'un manchon de montage ce qui déplace en va-et-vient l'outil placé dans la monture selon l'axe longitudinal de celui-ci.

Grâce à la présence de la rainure circulaire on obtient une adaptation convenable de la section triangulaire de l'instrument de nettoyage à la configuration des espaces interdentaires ainsi qu'un travail de l'instrument de nettoyage dans les espaces interdentaires suivant des mouvements de va-et-vient d'amplitude constante.

En raison de nécessités de fonctionnement, l'excentrique et le manchon sont positionnés sans jeu dans la rainure annulaire.

Ce montage permet l'introduction à l'arrêt, de l'instrument de nettoyage triangulaire en position convenable dans l'espace interdentaire, lui-même triangulaire, quelle que soit la situation du contre angle à l'extérieur de la bouche avant la mise en marche de ce contre angle; ce qui a pour effet, à ce moment, de mobiliser l'instrument de nettoyage dans un mouvement de va-et-vient axial d'amplitude constante.

Par conséquent, cet appareil prévu pour le nettoyage et (ou) le polissage des espaces interproximaux des dents permet:

– à l'arrêt, c'est-à-dire quand l'excentrique n'est pas entraîné, une rotation de l'instrument sur son axe pour adapter sa section triangulaire à l'espace interproximal

– lors de la mise en marche du contre-angle, c'est-à-dire quand l'excentrique est entraîné = mouvement axial de va-et-vient d'amplitude constante de 30 mm de l'instrument dont les parois latérales légèrement abrasives viennent nettoyer les faces proximales des dents.

L'instrument de nettoyage avec le contre-angle dans lequel il s'adapte sont impropres à la réalisation d'un traitement endodontique.

Une tête d'entraînement destinée aux objectifs mentionnés au début, est déjà connue par US-A-4 299 571.

Dans cette tête d'entraînement, le dispositif d'entraînement est constitué par un entraînement à excentrique, l'excentrique s'engage dans un évidement de forme correspondante prévu sur un support et communique à ce support et à un instrument endodontique inséré dans celui-ci un mouvement exclusif de va-et-vient d'amplitude constante selon la direction axiale du support.

Au cours de son utilisation, il s'est révélé que, en raison de l'amplitude constante du travail de l'instrument il se produit des complications importantes lors de la préparation de canaux courbes et des risques de rupture de l'instrument.

L'invention concerne une tête d'entraînement qui permette l'exécution d'interventions endodontiques en supprimant les risques de rupture des instruments endodontiques.

Selon l'invention, le but est atteint par les caractéristiques définies par la revendication 1 ou la revendication 7.

Des caractéristiques préférentielles, qui constituent des développements avantageux de l'invention sont contenues dans les revendications subordonnées.

De façon avantageuse, l'invention crée une tête d'entraînement pour instruments endodontiques dans laquelle le dispositif de fixation destiné à l'instrument est capable d'exécuter avec l'instrument, un mouvement de va-et-vient axial est en même temps, un mouvement de rotation lors du travail de cet instrument.

L'amplitude du mouvement axial et du mouvement de rotation peut varier en fonction de la friction de la lime endodontique sur les parois canalaires.

La tête d'entraînement convient aussi bien au cathétérisme et à la mise en forme du canal qu'à l'obturation du canal par compression et compaction de la gutta-percha.

En outre, chacune des diverses opérations du traitement endodontique peut être totalement mécanisée et en raison du principe de fonctionnement réalisée d'une façon supérieure aux opérations manuelles.

Lors de l'exécution du cathétérisme, une lime comportant longitudinalement des lames hélicoïdales, montée sur la tête d'entraînement est animée d'un mouvement vibratoire résultant des mouvements longitudinaux alternatifs communiqués par le dispositif d'entraînement.

Lors de la rencontre d'un obstacle (réduction brutale de la lumière canalaire) ou d'une coudure de canal, la lime se trouve entraînée en rotation en raison du contact de ses spires inclinées avec la paroi canalaire.

Ce mouvement de va-et-vient de faible amplitude de la lime accompagné de son mouvement de rotation guidé par les spires instrumentales, favorise la progression de l'instrument dans le canal dentaire, en permettant notamment un franchissement aisé des obstacles ou des coudures, sans création de butées ou de faux canaux et sans subir de contraintes.

L'amplitude des mouvements longitudinaux et de rotation de la lime s'adaptent en fonction de la friction des lames sur la paroi canalaire.

Lors de l'intervention de mise en forme canalaire, la tête d'entraînement permet d'effectuer un limage de grande amplitude lorsque la résistance des parois du canal sur la lime est faible, et un limage de faible amplitude lorsque la résistance des parois du canal augmente.

Ceci réduit sensiblement les risques de rupture de l'instrument.

Par ailleurs, lorsque la lime est entraînée à grande vitesse, l'amplitude de ses mouvements longitudinaux alternatifs est également réduite.

Enfin, pour l'obturation canalaire suivant les techniques de condensation à la gutta-percha, il est possible de monter sur la tête d'entraînement un condenseur à gutta-percha de type condenseur à main habituellement utilisé à cet effet et dont le manche est simplement aménagé pour permettre son montage amovible sur le support ou noyau mobile de la tête d'entraînement.

En ce cas, l'extrémité libre du condenseur provoque un échauffement de la gutta-percha qui rend celle-ci plus malléable et lui permet de s'adapter au vide canalaire.

Des exemples de réalisation de l'invention sont exposés en regard des dessins annexés dans la description qui suit.

La figure 1 est une vue en coupe axiale d'un exemple avantageux de réalisation de la tête d'entraînement pour instruments d'endodontique selon l'invention, passant par l'axe du noyau porte-instrument mobile de ladite tête d'entraînement.

La figure 2 est une vue en coupe longitudinale suivant la ligne 2–2 de la figure 1.

La figure 3 est une vue en coupe transversale selon la ligne 3–3 de la figure 1.

La figure 4 est une vue en coupe transversale analogue à la figure 3, montrant plus particulièrement le mécanisme permettant d'obtenir la variation d'amplitude des mouvements longitudinaux alternatifs et la liberté de rotation d'amplitude limitée du noyau porte-instrument.

La figure 5 est une vue en coupe longitudinale analogue à la figure 1, illustrant le montage d'un instrument endodontique (lime) sur le noyau mobile de la tête d'entraînement et représenté en cours d'enfoncement dans le canal d'une dent.

La figure 6 est une vue de face du noyau porte-instrument, montrant une variante d'exécution des moyens de fixation de l'instrument sur ledit noyau.

La figure 7 est une vue en plan de la figure 6.

La figure 8 est une vue de face de la partie supérieure d'un instrument dont le manche est conformé pour permettre son montage amovible sur le noyau porte-instrument représenté aux figures 6 et 7.

Les figures 9 et 10 sont des vues de détail, en coupe axiale, montrant deux étapes successives de la troisième opération de la procédure endodontique, réalisée à l'aide de la tête d'entraînement selon l'invention.

On se réfère auxdits dessins pour décrire un exemple d'exécution intéressant, quoique nullement limitatif, de la tête d'entraînement d'instrument endodontique selon l'invention.

Cette tête d'entraînement peut être avantageusement constituée par une tête de contre-angle dont les différents organes constitutifs non concernés par l'invention ne sont pas décrits ni illustrés et sont exécutés selon les techniques connues.

Elle comporte un arbre tournant 1 dont l'extrémité réceptrice (non représentée) est agencée pour pouvoir être accouplée à une transmission permettant son entraînement en rotation, par exemple à partir d'un tour électrique de chirurgien-dentiste. La vitesse de rotation de l'arbre 1 peut être plus ou moins élevée, suivant les rapports de réduction du système de démultiplication associé à la transmission et contenu, par exemple, dans le contre-angle.

L'arbre 1 est logé dans un carter cylindrique métallique 2 équipé d'un joint de graissage et autorisant une rotation à frottement doux dudit arbre.

L'extrémité motrice de l'arbre 1 est munie d'un excentrique 3 constitué par un tourillon de section circulaire ou ovale.

L'arbre 1 et l'excentrique 3 ont, par exemple, des diamètres de 8 mm et 3 mm, respectivement, et l'excentricité e dudit excentrique est avantageusement, dans ce cas, de 0,50 mm. La valeur ou dimension de l'excentricité e de l'excentrique 3 correspond exactement ou sensiblement à la valeur ou dimension du pas des spires des limes utilisées pour les interventions de cathétérisme et de mise en forme canalaire, le nombre de spires au millimètre de ces limes étant, en effet, de 2.

La face terminale de l'excentrique peut être plane ou, de préférence, concave.

L'excentrique 3 est logé dans une rainure ou coulisse 4 ménagée, latéralement, dans un noyau mobile 5 contenu dans la cavité cylindrique 6 d'un corps 7. L'axe de ce corps 7 et de la cavité cylindrique 6 est perpendiculaire à l'axe du carter 2 et ledit corps 7 peut être formé d'une seule pièce avec ledit carter 2 ou rapporté, de toute manière adéquate, sur la partie terminale de ce dernier.

La paroi inférieure 7a du corps 7 est pourvue d'un orifice central 8, de préférence de forme circulaire. D'autre part, la face interne de cette paroi peut être avantageusement pourvue d'un revêtement 9 en matière plastique telle que polyfluoréthènes («Téflon»: marque déposée), par exemple, permettant d'amortir les vibrations.

L'ouverture supérieure du corps 7 peut rester ouverte ou être fermée au moyen d'un couvercle amovible.

Le noyau mobile 5 affecte une forme générale cylindrique et il est monté avec une aptitude de coulissement axial et de rotation à frottement doux dans la cavité ou alésage 6 du corps 7.

Le noyau 5 comporte un évidement axial 10 aligné avec l'axe de la perforation 8 de la paroi inférieure 7a du corps 7. Il est, d'autre part, doté de tous moyens de jonction adéquats destinés à assurer la fixation amovible et le blocage, au moins en translation axiale, du manche d'un instrument de la procédure endodontique engagé dans l'évidement axial 10 dudit noyau et agencé de manière complémentaire.

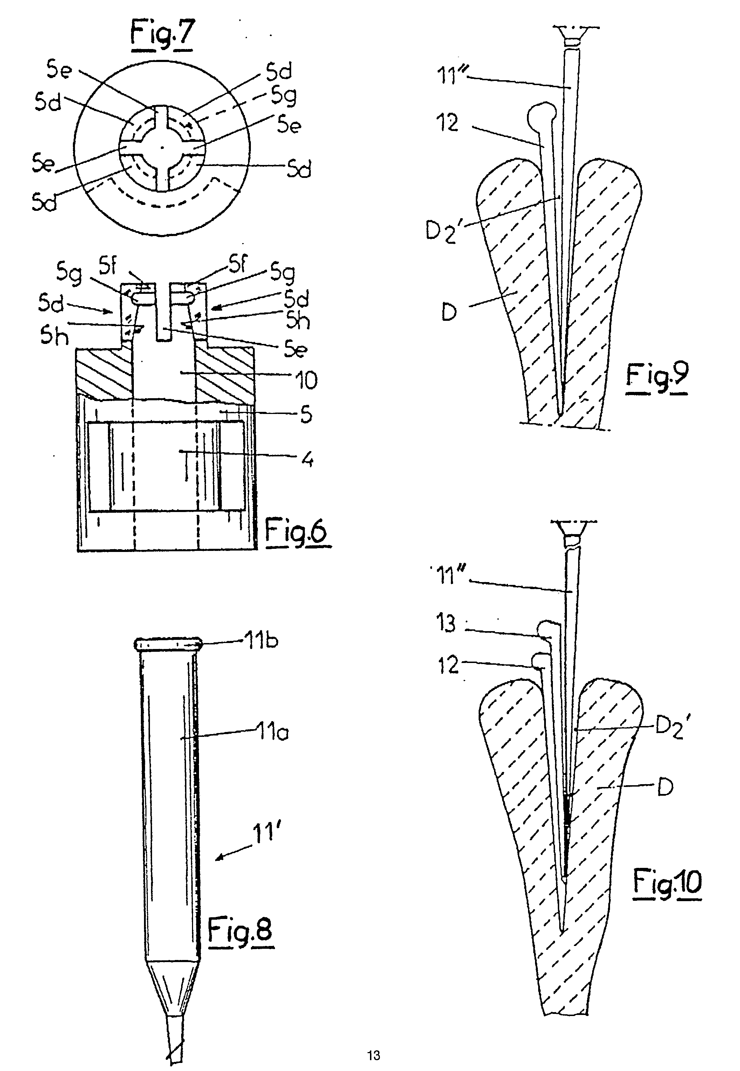

Selon le mode d'exécution très avantageux illustré aux figures 6 et 7, ces moyens sont constitués par quatre doigt flexibles 5d disposés autour de l'ouverture supérieure de l'évidement axial 10 et séparés par des rainures 5e. Ces doigts peuvent être formés d'une seule pièce avec le corps du noyau 5 lequel peut être exécuté dans un acier convenable qui, conjointement avec le choix d'une section adéquate de la paroi desdits doigts, donne à ces derniers la possibilité de fléchir en direction de l'extérieur lors de l'insertion du manche 11a d'un instrument 11.

A leur extrémité supérieure, les doigts 5d sont pourvus d'un rebord 5f dirigé vers l'intérieur et destiné à retenir le sommet du manche de l'instrument.

Les surfaces internes des doigts 5d sont dotées, immédiatement au-dessous des rebords 5f dirigés vers l'intérieur, de cavités arquées 5g dont l'ensemble constitue une rainure circulaire permettant le logement et la rétention de la partie supérieure du manche de l'instrument pourvue d'un bourrelet circulaire 11b de section complémentaire à celle desdites cavités arquées.

Au-dessous des cavités arquées, les parois internes des doigts 5d présentent des surfaces pentées 5h divergeant en direction du bas.

On comprend que lorsque le manche 11a d'un instrument 11, 11′ est engagé, par en dessous, dans le noyau 5, sa tête pourvue du bourrelet 11b glisse sur les surfaces pentées 5h des doigts de retenue 5d et entraîne un fléchissement radial de ces derniers en direction de l'extérieur, jusqu'à ce qu'elle vienne s'engager dans les cavités arquées 5g. L'instrument est alors maintenu en place par l'action de ressort exercée par les doigts de retenue 5d autour de la tête du manche dudit instrument emprisonnée entre ces derniers.

Le démontage de l'instrument s'effectue au moyen d'un outil spécial permettant d'écarter les doigts de retenue et de libérer la tête du manche dudit instrument.

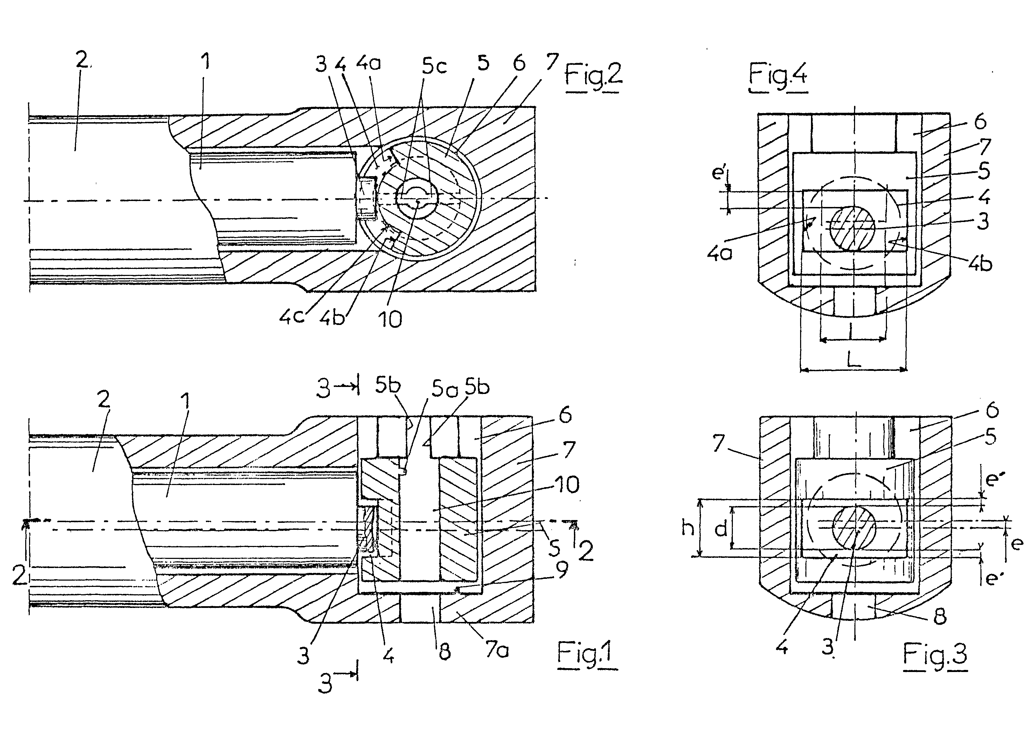

Selon un autre mode d'exécution représenté aux figures 1 à 5, les moyens de fixation amovible de l'instrument comprennent un bossage 5a et un méplat ménagés dans l'évidement axial 10 du noyau 5, à l'opposé l'un de l'autre, et destinés à immobiliser l'instrument fixé dans le noyau 5, en translation et en rotation, respectivement, le manche dudit instrument étant agencé de manière complémentaire pour autoriser cette fixation. En outre, à sa partie supérieure, le noyau 5 peut avantageusement comporter une fente diamétrale 5c pour assurer le blocage du manche de l'instrument.

La rainure ou coulisse 4 ménagée latéralement dans le corps du noyau 5, a une orientation perpendiculaire à l'axe de celui-ci et sa hauteur h, c'est-à-dire sa dimension parallèle à l'axe dudit noyau, est assez nettement supérieure au diamètre d ou au grand axe de symétrie de l'excentrique 3 (selon qu'il s'agit d'une excentrique de section circulaire ou ovale). L'écart entre le diamètre d et la hauteur h est, par exemple, de 0,75 mm, de sorte qu'il existe un jeu e′ relativement important entre l'une ou l'autre des parois supérieure et/ou inférieure de ladite rainure et ledit excentrique. Celui-ci est ainsi monté avec une aptitude de débattement parallèle à l'axe du noyau 5, à l'intérieur de la rainure latérale 4 de ce dernier.

On conçoit que lorsque l'arbre 1 est mis en rotation, l'excentrique 3, lors de son mouvement révolutif atour de l'axe dudit arbre, coulisse dans la rainure 4 en communiquant des mouvements alternatifs de translation longitudinale au noyau 5 qui se trouve guidé par la surface interne cylindrique du corps 7.

L'amplitude de ces mouvements longitudinaux alternatifs peut être comprise entre:
– une amplitude minimum qui correspond à l'excentricité e de l'excentrique 3, par exemple 0,50 mm;
– et une amplitude maximum correspondant à l'excentricité e augmentée de la valeur du jeu e′ existant entre les parois supérieure et inférieure de la rainure ou coulisse 4 et l'excentrique, soit, par exemple, 0,50 mm + 0,75 mm = 1,25 mm.

On comprend qu'en raison de l'énergie cinétique emmagasinée par le noyau 5 lors de son mouvement dans une direction, ledit noyau a tendance à accomplir sa course maximum.

Toutefois, l'amplitude de cette course, en cours de travail, est fonction de la résistance rencontrée par l'instrument rendu solidaire du noyau mobile.

La disposition permettant d'obtenir une variation de l'amplitude des mouvements longitudinaux alternatifs de l'instrument en fonction de la résistance à l'enfoncement rencontrée est très intéressante, notamment pour l'opération de mise en forme canalaire. En effet, lors de la rencontre d'une résistance pariétale importante, il est préférable d'effectuer un limage de faible amplitude laquelle ne doit seulement pas être inférieure au pas des spires de la lime et peut donc être limitée à la valeur de l'excentricité e, soit 0,50 mm, ceci réduit considérablement les risques de butée. D'autre part, lorsque la résistance à l'enfoncement est faible, il est préférable de pouvoir effectuer un limage de grande amplitude.

Selon une autre disposition caractéristique particulièrement intéressante de l'invention, le noyau porte-instrument 5 est agencé, d'une part, de manière à permettre un déplacement alternatif de l'instrument le long de son axe longitudinal, par exemple de la manière avantageuse précédemment décrite et, d'autre part, de façon à conférer, audit instrument, un certain degré de liberté de mouvement de rotation autour dudit axe.

Suivant le mode d'exécution illustré, le noyau 5, mobile axialement, est également monté avec un axe libre lui conférant une liberté de mouvement de rotation, de préférence d'amplitude limitée.

Pour cela, la rainure ou coulisse 4 a une longueur L, sensiblement plus importante que la longueur l (figurée en traits interrompus à la figure 4) nécessaire au débattement ou déplacement alternatif de l'excentrique 3 dans ladite coulisse, et le noyau porte-instrument cylindrique 5 est monté avec une liberté de rotation dans l'alésage cylindrique 6 du corps 7.

L'amplitude du mouvement de rotation du noyau 5 est limitée par le fait que la rainure ou coulisse 4 a une longueur correspondant à un arc inférieur à 180 degrés, de sorte que ce mouvement de rotation est limité par les extrémités opposées 4a, 4b de ladite rainure. D'autre part, pour favoriser le mouvement révolutif du noyau 5, le fond 4c de la rainure ou coulisse 4 a, de préférence, une surface arrondie, par exemple cylindrique.

Selon ce mode d'exécution, les doigts de retenue 5b sont conformés pour exercer une forte pression autour de la tête du manche de l'instrument engagé dans le noyau mobile, de façon à l'empêcher de tourner par rapport à celui-ci.

Suivant une variante d'exécution, le noyau mobile 5 peut toutefois être monté sans aucune liberté de rotation dans la cavité 6 du corps 7. Dans ce cas, le noyau 5 est agencé pour permettre le montage d'un instrument, par exemple une lime, avec une liberté de rotation dudit instrument, par rapport audit noyau.

Pour cela, les doigts de retenue 5b peuvent être conformés pour exercer une faible pression autour du manche de l'instrument engagé dans le noyau 5, de façon que ledit instrument puisse avoir une certaine liberté de rotation par rapport audit noyau.

On conçoit que selon cette variante d'exécution (fig. 8), l'instrument 11' est immobilisé en translation axiale par rapport au noyau 5, par l'intermédiaire du bourrelet 11b de son manche emprisonné dans les cavités arquées 5g des doigts 5d, mais il se trouve monté avec une liberté de rotation autour de son axe longitudinal, par rapport audit noyau.

Grâce à la liberté de rotation du noyau mobile 5 et/ou de l'instrument d'endodontique tel que lime de cathétérisme 11' monté sur ledit noyau mobile 5, lorsque ledit instrument rencontre un obstacle D1 ou une coudure, lors de son enfoncement dans le canal D2 de la dent D, l'inclinaison des spires de ladite lime engendre une rotation de cette dernière (autorisée par le montage avec liberté de rotation du noyau 5 et/ou de la lime 11'), dès que lesdites spires mordent sur la dentine. Ce mouvement de rotation guidé par les spires instrumentales et combiné au mouvement vibratoire de faible amplitude de l'instrument, facilite grandement le franchissement de l'obstacle D1 ou de la coudure.

Pour permettre aux arêtes des spires d'être pleinement actives, l'amplitude du mouvement de la lime 11', dans le sens longitudinal, ne doit pas être inférieure au pas du filetage, c'est-à-dire à 0,50 millimètres environ, car il est estimé qu'au-dessous de 1/3 de millimètre, l'effet mécanique serait pratiquement nul, de sorte que l'usure pariétale serait également nulle.

En fonction des caractéristiques de fabrication des limes, du nombre de spires au millimètre et de l'inclinaison de ces spires, l'amplitude minimum du mouvement desdites limes, dans le sens longitudinal peut être, bien entendu, inférieure ou supérieure au chiffre susmentionné.

Il en va de même en ce qui concerne l'amplitude maximum de ce mouvement.

Les figures 9 et 10 illustrent, de manière schématique, deux étapes successives de la troisième opération de la procédure endodontique exécutée à l'aide du dispositif selon l'invention.

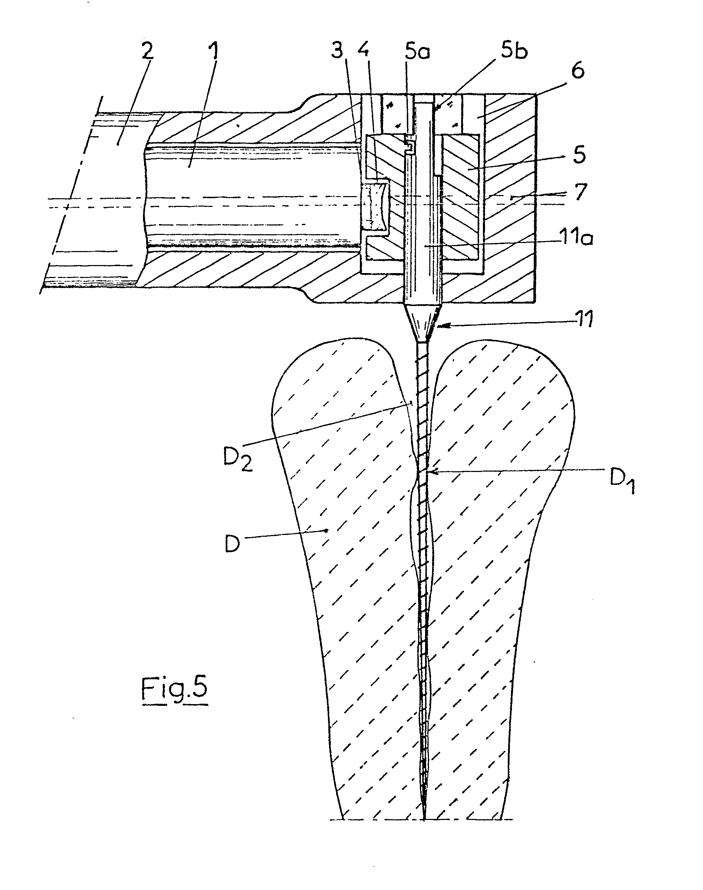

Pour cette opération, on utilise un instrument 11'' dont la portion active illustrée a la forme de la portion active des condenseurs couramment utilisés pour la condensation à la gutta-percha, et dont la partie supérieure (non illustrée) est constituée par un manche ayant, par exemple, la forme du manche 11a de la lime 11 illustrée à la figure 5 ou celle du manche de la lime représenté à la figure 8, et qui est fixé, comme indiqué précédemment, au noyau 5 de la tête d'entraînement selon l'invention.

Selon la première phase de l'opération illustrée à la figure 9, un bâtonnet 12 de gutta-percha est engagé dans le canal radiculaire D2' précédemment mis en forme et l'instrument 11'' est ensuite introduit dans l'espace subsistant entre ledit bâtonnet et la paroi dudit canal. Le mouvement vibratoire de l'instrument permet un compactage de l'extrémité inférieure du bâtonnet 12 dans le fond du canal. Ce mouvement vibratoire engendre un chauffage et un ramollissement de la partie inférieure du bâtonnet de gutta-percha, en raison du frottement exercé par l'instrument sur ledit bâtonnet, ce qui favorise la régularité et l'homogénéité du compactage et, par conséquent, la parfaite obturation du canal.

L'instrument 11'' est ensuite retiré et on introduit un second bâtonnet 13 de gutta-percha dans le canal, comme illustré à la figure 10. On réintroduit alors ledit instrument dans le canal afin que son extrémité active inférieure puisse se trouver au contact avec la partie inférieure du second bâtonnet, et l'opération précédemment décrite est répétée avec ce dernier.

L'opération d'obturation canalaire se poursuit avec d'autres bâtonnets, jusqu'à ce que le canal soit complètement obturé.

## Revendications

1. Tête d'entraînement pour un instrument (11, 11') servant à intervenir sur des racines dentaires, constituée d'une pièce principale (7), qui comporte une cavité (6) et un support mobile (5) disposé dans cette cavité, lequel support (5) possède un évidement, dans lequel pénètre un dispositif d'entraînement (3) pour communiquer au support (5) un mouvement axial de va-et-vient, le support comportant de plus un dispositif de fixation (5b; 5d, 5g) pour l'instrument (11, 11'), caractérisée en ce que l'évidement est formé sur le support (5) par une rainure latérale (4) et en ce que le dispositif de fixation (5b, 5a) est, indépendamment du dispositif d'entraînement (3), mobile en même temps en direction axiale et autour de l'axe longitudinal du support (5), la structure de la tête d'entraînement étant telle que, lors de son utilisation, l'amplitude du mouvement axial du dispositif de fixation (5b; 5d, 5g) varie en fonction de la résistance au mouvement que rencontre le dispositif de fixation (5b; 5d, 5g).

2. Tête d'entraînement selon la revendication 1, caractérisé en ce qu'un intervalle axial (e') est prévu entre la rainure (4) et le dispositif d'entraînement (3), pour une amplitude variable du mouvement axial du support (5).

3. Tête d'entraînement selon la revendication 1 ou 2, caractérisé en ce que la grandeur de l'amplitude du mouvement axial du support (5) et/ou du dispositif de fixation (5b; 5g) décroît à mesure que croît la fréquence des mouvements axiaux alternatifs du dispositif d'entraînement (3).

4. Tête d'entraînement selon l'une des revendications précédentes, caractérisée en ce qu'il est prévu un entraînement à excentrique (3) en tant que dispositif d'entraînement (3) et en ce que le mouvement rotatoire de l'instrument (11, 11'), par rapport à la pièce principale (7) et à l'entraînement à excentrique (3), est fonction de la résistance que rencontre l'instrument endodontique (11, 11') durant son utilisation et en ce que le mouvement rotatif est, au moins en partie, indépendante du mouvement de rotation de l'entraînement à excentrique (3).

5. Tête d'entraînement selon l'une des revendications précédentes, caractérisée en ce que la rainure latérale (4) est disposée orthogonalement par rapport à l'axe longitudinal du support (5), la rainure (4) ayant une longueur (L) plus grande que la longueur (l) qui est traversée dans la rainure (4) par l'entraînement à excentrique (3).

6. Tête d'entraînement selon la revendication 5, caractérisée en ce que la largeur (h) de la rainure (4) est plus grande que (2e+d), e étant l'excentricité de l'entraînement à excentrique (3) et d étant le diamètre du maneton de l'entraînement à excentrique (3).

7. Tête d'entraînement à instrument endodontique insérable (11, 11') sous forme d'une lime endodontique comportant une arête hélicoïdale sur sa face extérieure, cette tête étant constituée d'une pièce principale (7) qui comporte une cavité (6) et un support mobile (5) disposé dans cette cavité, lequel support (5) possède un évidement, dans lequel pénètre un dispositif d'entraînement (3) pour communiquer au support (5) un mouvement axial de va-et-vient, et un dispositif de fixation (5b; 5d, 5g) pour l'instrument (11, 11'), caractérisée en ce que l'instrument (11, 11') est, indépendamment du dispositif d'entraînement (3), mobile dans le support (5) en même temps en direction axiale et autour de l'axe longitudinal du support (5), l'amplitude de son mouvement axial et de son mouvement rotatoire étant fonction de la résistance que rencontre l'instrument (11, 11') lors de l'intervention dans un canal dentaire.

8. Tête d'entraînement selon la revendication 7, caractérisée en ce que la grandeur de l'amplitude du dispositif d'entraînement (3) est fonction du pas de spire de la lime endodontique pour le cathétérisme et la mise en forme de canaux dentaires.

9. Tête d'entraînement selon l'une des revendications précédentes, caractérisée en ce que le support (5) possède des moyens d'accouplement (5a) pour la prise démontable, solidaire en rotation, de l'instrument endodontique (11).

10. Tête d'entraînement selon l'une des revendications 1 à 8, caractérisée en ce que le support (5) possède un siège de maintien (5b) dans lequel l'instrument endodontique (11') est fixé de manière à pouvoir tourner autour de son axe longitudinal.

11. Tête d'entraînement selon la revendication 7 ou 8, caractérisée en ce que le support (5) possède des moyens d'accouplement (5d, 5g) pour la prise de l'instrument endodontique, avec possibilité de démontage et de déplacement radial.

12. Tête d'entraînement selon l'une des revendications précédentes, caractérisée en ce que le support (5) a une forme cylindrique et est disposé et guidé dans une cavité cylindrique (6) de la pièce principale (7).

13. Tête d'entraînement selon l'une des revendications précédentes, caractérisée en ce que la cavité (6) est limitée par une paroi inférieure (7a) de la pièce principale (7), laquelle paroi est munie d'une couche de matière plastique (9) pour amortir les vibrations.

## Claims

1. A drive head for an instrument (11, 11') for treating tooth roots, comprising a support body (7) having a hollow space (6) and a movable support means (5) disposed in that hollow space (6), said support means (5) having a recess, which is engaged by a driving means (3) for producing a to and fro axial movement of the support means (5), said support means (5) comprising a mounting means (5b; 5d, 5g), characterized in that said recess at said support means (5) is formed by a lateral groove (4), and that said mounting means (5b; 5d, 5g) is simultaneously movable in the axial direction and about the longitudinal axis of said support means (5), independently of the driving means (3), the structure of the driving head being such that, in use, the amplitude of the axial movement of the mounting means (5b, 5d, 5g) varies as a function of the resistance to movement encountered by the mounting means (5b; 5d, 5g).

2. A drive head according to claim 1, characterized by an axial interval (e') for a variable amplitude of said axial movement of said support means (5), said axial interval being provided between said groove (4) and said driving means (3).

3. A drive head according to claim 1 or 2, characterized in that the amount of the amplitude of said axial movement of said support means (5) and/or said mounting means (5b; 5d, 5g) decreases as a function of increasing frequency of said alternating axial movements of said driving means (3).

4. A drive head according to a previous claim, characterized in that said driving means includes an eccenter drive (3) and that the rotary movement of said instrument (11, 11') in relation to said support body (7) and said eccenter drive (3) is a function of the resistance to movement encountered by said endodental instrument (11, 11') during its use, and that said rotary movement is at least partially independent from the rotary movement of said eccenter drive (3).

5. A drive head according to a previous claim, characterized in that said lateral groove (4) has an orientation perpendicular to the longitudinal axis of said support means (5) said groove (4) comprising a length being greater than the length (1) in the groove (4) traversed by said eccenter drive (3).

6. A drive head according to claim 5, characterized in that the width (h) of said groove (4) is greater than (2e + d), e being the eccentricity of said eccenter drive (3) and d being the diameter of the crank pin of said eccenter drive (3).

7. A drive head with an insertable endodental instrument (11, 11') in form of a endodental file having a spiral crest at the outer surface thereof, comprising a support body (7) which includes a hollow space (6) and a movable support means (5) disposed in said hollow space, said support means (5) having a recess, engaged by a driving means (3) for producing a to and from axial movement of said support means (5), said support means (5) comprising a mounting means (5b; 5d, 5g) for said instrument (11, 11'), characterized in that said instrument (11, 11') is movable within said support means (5) independently of the driving means (3) simultaneously in the axial direction and about the longitudinal axis of said support means (5), said amplitudes of its axial and rotary movements being a function of the resistance to movement encountered by the instrument (11, 11') with its use in a tooth canal.

8. A drive head according to claim 7, characterized in that the amount of the amplitude of said driving means (3) is a function of the pitch of the spiral crest of said endodental file for catheterizing and working out of tooth canals.

9. A drive head according to a previous claim, characterized in that said support means (5) comprises coupling means (5a) for detachably receiving said endodental instrument (11) without rotation.

10. A drive head according to one of claims 1–8, characterized in that said support means (5) comprises a receiving means (5b), wherein said endodontic instrument (11') is mounted movably about its length axis.

11. A drive head according to claim 7 or 8, characterized in that said support means (5) comprises coupling means (5d, 5g) for detachably and radial movably receiving said endodontic instrument (11').

12. A drive head according to a previous claim, characterized in that said support mean (5) comprises the form of a cylinder and is disposed and guided within a cylindrical hollow space (6) of said support body (7).

13. A drive head according to a previous claim, characterized in that said hollow space (6) is defined by a lower wall (7a) of said support body (7), which is provided with a layer (9) of plastic material for damping vibrations.

**Patentansprüche**

1. Antriebskopf für ein Instrument (11, 11') zur Behandlung von Zahnwurzeln, bestehend aus einem Hauptstück (7), das einen Hohlraum (6) und einen in diesem Hohlraum angeordneten beweglichen Halter (5) aufweist, wobei der Halter (5) eine Ausnehmung aufweist, in die eine Antriebseinrichtung (3) zur Erzeugung einer hin- und hergehenden axialen Bewegung des Halters (5) eingreift, wobei der Halter (5) eine Befestigungseinrichtung (5b; 5d, 5g) für das Instrument (11, 11') aufweist, dadurch gekennzeichnet, dass die Ausnehmung an dem Halter (5) durch eine seitliche Nut (4) gebildet ist, und dass die Befestigungseinrichtung (5b; 5d) gleichzeitig in axialer Richtung und um die Längsachse des Halters (5) unabhängig von der Antriebseinrichtung (3) bewegbar ist, wobei der Aufbau des Antriebskopfes derart ist, dass sich bei seiner Verwendung die Amplitude der Axialbewegung der Befestigungseinrichtung (5b; 5d, 5g) in Abhängigkeit von dem Bewegungswiderstand ändert, den die Befestigungseinrichtung (5b; 5d, 5g) erfährt.

2. Antriebskopf nach Anspruch 1, dadurch gekennzeichnet, das zwischen der Nut (4) und der Antriebseinrichtung (3) ein axialer Zwischenraum (e') für eine variable Amplitude der Axialbewegung des Halters (5) vorhanden ist.

3. Antriebskopf nach Anspruch 1 oder 2, dadurch gekennzeichnet, dass die Grösse der Amplitude der Axialbewegung des Halters (5) und/oder der Befestigungseinrichtung (5b; 5g) mit der Zunahme der Frequenz der wechselnden Axialbewegungen der Antriebseinrichtung (3) abnimmt.

4. Antriebskopf nach einem der vorangehenden Ansprüche, dadurch gekennzeichnet, dass als Antriebseinrichtung ein Exzenterantrieb (3) vorgesehen ist, und dass die Drehbewegung des Instruments (11, 11') relativ zu dem Hauptstück (7) und dem Exzenterantrieb (3) abhängig von dem Widerstand ist, den das Endodentalinstrument (11, 11') während seiner Verwendung erfährt, und dass die Drehbewegung wenigstens teilweise unabhängig von der Drehbewegung des Exzenterantriebs (3) ist.

5. Antriebskopf nach einem der vorangehenden Ansprüche, dadurch gekennzeichnet, dass die seitliche Nut (4) senkrecht zu der Längsachse des Halters (5) verläuft, wobei die Nut (4) eine Länge (L) aufweist, welche grösser als die Länge (1) in der Nut (4) ist, welche von dem Exzenterantrieb (3) durchquert wird.

6. Antriebskopf nach Anspruch 5, dadurch gekennzeichnet, dass die Breite (h) der Nut (4) grösser als (2e + d) ist, wobei e die Exzentrizität des Exzenterantriebs (3) ist und wobei d der Durchmesser des Kurbelzapfens des Exzenterantriebs (3) ist.

7. Antriebskopf mit einem einsetzbaren Endodentalinstrument (11, 11') in Form einer an ihrer Aussenfläche eine schraubenförmige Schneide aufweisenden Endodentalfeile, bestehend aus einem Hauptstück (7), das einen Hohlraum (6) und einen in diesem Hohlraum angeordneten beweglichen Halter (5) aufweist, wobei der Halter (5) eine Ausnehmung aufweist, in die ein Antriebseinrichtung (3) zur Erzeugung einer hin- und hergehenden axialen Bewegung des Halters (5) eingreift, wobei der Halter (5) eine Befestigungseinrichtung (5b; 5d, 5g) für das Instrument (11, 11') aufweist, dadurch gekennzeichnet, dass das Instrument (11, 11') in dem Halter (5) unabhängig von der Antriebseinrichtung (3) gleichzeitig in axialer Richtung und um die Längsachse des Halters (5) bewegbar ist, wobei die Amplitude seiner Axialbewegung und Drehbewegung abhängig ist von dem Widerstand, auf den das Instrument (11, 11') bei Verwendung in einem Zahnkanal trifft.

8. Antriebskopf nach Anspruch 7, dadurch gekennzeichnet, dass die Grösse der Amplitude der Antriebseinrichtung (3) abhängig von der Ganghöhe der Endodentalfeile für das Katheterisieren und Ausarbeiten von Zahnkanälen ist.

9. Antriebskopf nach einem der vorangehenden Ansprüche, dadurch gekennzeichnet, dass der Halter (5) Kupplungsmittel (5a) für die lösbare drehfeste Aufnahme des Endodentalinstruments (11) aufweist.

10. Antriebskopf nach einem der Ansprüche 1–8, dadurch gekennzeichnet, dass der Halter (5) eine Halteaufnahme (5b) aufweist, in der das Endodentalinstrument (11') um seine Längsachse drehbar befestigt ist.

11. Antriebskopf nach Anspruch 7 oder 8, dadurch gekennzeichnet, dass der Halter (5) Kupplungsmittel (5d, 5g) für die lösbare und radial bewegbare Aufnahme des Endodentalinstruments (11') aufweist.

12. Antriebskopf nach einem der vorangehenden Ansprüche, dadurch gekennzeichnet, dass der Halter (5) zylinderförmig ausgebildet und in einem zylinderförmigen Hohlraum (6) des Hauptstücks (7) angeordnet und geführt ist.

13. Antriebskopf nach einem der vorangehenden Ansprüche, dadurch gekennzeichnet, dass der Hohlraum (6) von einer unteren Wand (7a) des Hauptstücks (7) begrenzt ist, die zur Schwingungsdämpfung mit einer Kunststoffschicht (9) versehen ist.

Fig.4

Fig.2

Fig.3

Fig.1

Fig.5

Fig.7

Fig.6

Fig.8

Fig.9

Fig.10